Europäisches Patentamt

**European Patent Office**

Office européen des brevets

(19)

(11) Veröffentlichungsnummer: **0 019 293**
**A1**

(12)

# EUROPÄISCHE PATENTANMELDUNG

(21) Anmeldenummer: **80102761.6**

(22) Anmeldetag: **19.05.80**

(51) Int. Cl.³: **B 65 D 45/08**
**F 16 J 13/20**

(30) Priorität: **22.05.79 DE 2920677**

(43) Veröffentlichungstag der Anmeldung:
**26.11.80 Patentblatt 80/24**

(84) Benannte Vertragsstaaten:
**CH FR GB LI NL SE**

(71) Anmelder: **Planatolwerk Willy Hesselmann Chemische und Maschinenfabrik für Klebetechnik
Fabrikstrasse 14
D-8201 Thansau bei Rosenheim(DE)**

(72) Erfinder: **Nawrat, Max
Wiesenweg 6
D-8201 Niedermoosen(DE)**

(74) Vertreter: **Ernicke, Hans-Dieter, Dipl.-Ing.
Schwibbogenplatz 2b
D-8900 Augsburg(DE)**

(54) **Druckbehälter mit Sicherheitsventil für Klebstoffe und dgl.**

(57) Ein Druckbehälter mit Sicherheitsventil für Klebstoffe u. dgl. weist einen trichterförmigen Stutzen (1) auf, an dessen konischer Innenfläche (20) ein Behälterdeckel (2) dichtend anliegt. Zwischen einem den Stutzen (1) übergreifenden Bügel (4) und dem gleichzeitig das Beaufschlagungselement des Sicherheitsventils darstellenden Behälterdeckel (2) ist eine Druckfeder (7) angeordnet, deren Vorspannung den Schließdruck bestimmt, der gleichzeitig der Öffnungsdruck des Sicherheitsventils ist. Diese Feder (7) umgreift eine am Behälterdeckel (2) undrehbar, befestigte Spindel (6), die mit einem Linksgewinde-Zapfen (23) eine Bohrung (30) des Bügels (4) durchsetzt und ein Handrad (8) aufnimmt, dessen Nabe (14) das entsprechende Gewinde trägt und auf dem Linksgewinde-Zapfen (23) zwischen einer Fixierscheibe (9) und dem Bügel (4) schraubbar ist.

./...

EP 0 019 293 A1

Planetolwerk W. Hesselmann
Dipl.-Ing.H.-D.Ernicks, Patentenwelt
Akte: 31-447,448 - Blatt 1 v. 1

- 1 -

## Druckbehälter mit Sicherheitsventil für Klebstoffe und dgl.

Die Erfindung bezieht sich auf einen Druckbehälter mit Sicherheitsventil für Klebstoffe, Lacke, Farben oder dgl. zum Verkleben neigende Substanzen, bei dem ein die Behälteröffnung überdeckender Bügel am Behälter schwenkbar gelagert sowie arretierbar ist und der Behälterdeckel mittels einer am Bügel geführten und sich daran abstützenden Spindel zum Schließen und Öffnen bewegbar ist.

Derartige Druckbehälter werden für Klebstoffe beispielsweise dann benötigt, wenn der Klebstoff durch Schläuche oder Rohre in vom Behälter entfernte Auftragegeräte gefördert werden muß. In diesem Fall wird Luft unter Druck in den Behälter eingeführt, der zu einer wesentlich größeren Fließgeschwindigkeit des meist mittel- bis hochviskosen Klebstoffes führt. Derartige Druckbehälter können beispielsweise auch zum Abfüllen von Klebstoffen, Farben, Lacken oder dgl. Substanzen eingesetzt werden.

Aus Sicherheitsgründen müssen solche Druckbehälter mit einem Sicherheitsventil ausgerüstet sein. Bei vorbekannten Druckbehältern werden in der Regel vorgefertigte Sicherheitsventile in den Behälterdeckel eingesetzt. Der Nachteil solcher Anordnungen besteht darin, daß der flüssige Inhalt des Druckbehälters bei dessen Neigen, Bewegen oder Transport an das Sicherheitsventil gelangen und dieses zusetzen kann. Handelt es sich bei der Behälterfüllung um Klebstoff oder sonstige klebende Substanzen, dann besteht die Gefahr der Verklebung der Ventilteile, was zur Unbrauchbarkeit führt. Meistens wird diese Beeinträchtigung des Sicherheitsventiles nicht bemerkt, so daß eine erhebliche Unfallgefahr durch

einen sich im Beh_älter aufbauenden Überdruck ergeben kann.

Der Erfindung liegt die Aufgabe zugrunde, einen Druckbehälter für die genannten oder ähnliche Substanzen zu entwickeln, bei dem das Sicherheitsventil durch unsachgemäßes Hantieren mit dem Druckbehälter in seiner Funktionsweise nicht beeinträchtigt wird.

Ausgehend von dem eingangs erwähnten Druckbehälter besteht das Wesen der Erfindung darin, daß der Behälterdeckel zugleich das Beaufschlagungselement für das Sicherheitsventil und durch eine Druckfeder gegenüber dem Bügel abgestützt ist.

Während vorbekannte Sicherheitsventile eine verhältnismäßig kleine Beaufschlagungsfläche besitzen, die dementsprechend schwer sauber zu halten ist, wird bei der Erfindung der Behälterdeckel als Beaufschlagungselement für das Sicherheitsventil verwendet. Dadurch kann der Ventilsitz wesentlich vergößert und demgemäß besser gereinigt werden. Da dieses Beaufschlagungselement zugleich der Behälterdeckel ist, kann der Behälterinhalt selbst beim Umkippen des Behälters die Funktionsfähigkeit des Sicherheitsventils in keiner Weise beeinträchtigen, weil der Behälterdeckel in der Schließstellung ständig unter Federdruck steht und die Behälteröffnung verschließt.

In einem bevorzugten Ausführungsbeispiel der Erfindung ist vorgesehen, daß eine mit dem Behälterdeckel unverdrehbar verbundene Spindel mit einem Ansatz eine Bohrung des Bügels durchgreift und außerhalb des Bügels ein Gewinde, vorzugsweise Linksgewinde, zur Aufnahme eines mit einem Gegengewinde versehenen und mit seiner Nabe sich am Bügel abstützenden Handrades aufweist. Die Anordnung des Linksgewindes hat den Vorteil, daß das Handrad in ge-

wohnter Weise zum Verschließen in Uhrzeigerrichtung und zum Öffnen des Behälters entgegengesetzt verdreht werden kann, was andererseits dazu führt, daß der Behälterdeckel in der Schließstellung lediglich unter der Kraft der Druckfeder steht, die zwischen dem Behälterdeckel und dem Bügel eingespannt bzw. vorgespannt ist.

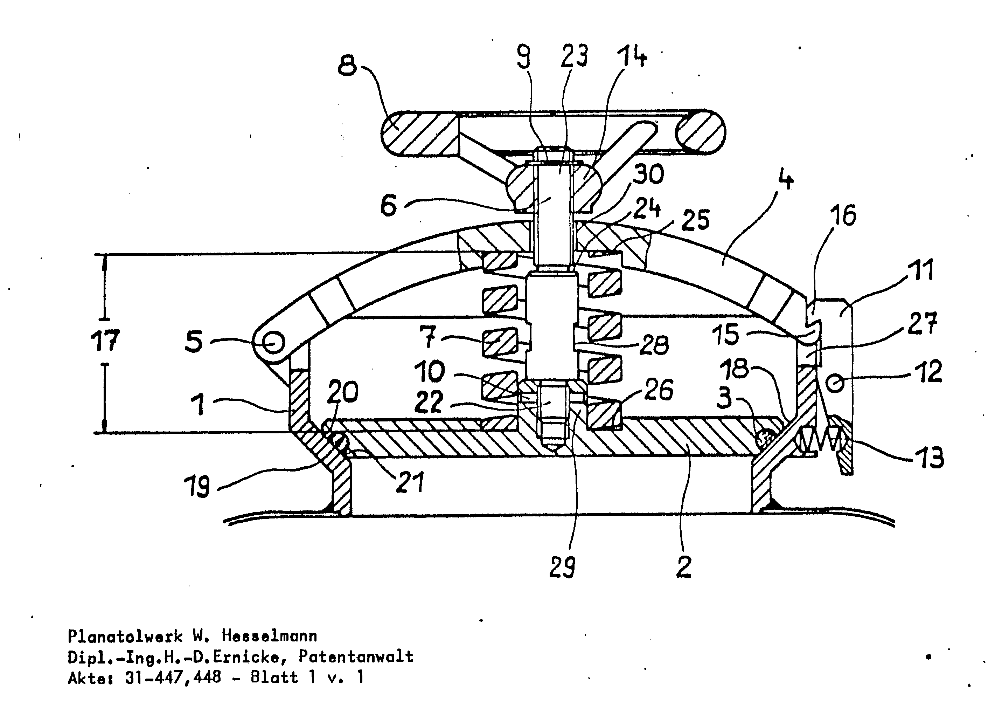

Weitere Einzelheiten der Erfindung ergeben sich aus den Unteransprüchen und der Zeichnung. In der Zeichnung ist die Erfindung anhand eines Ausführungsbeispieles schematisch dargestellt. Sie zeigt einen Vertikalschnitt durch den Verschluß und das Sicherheitsventil eines Druckbehälters.

Die Auslauföffnung des Behälters besitzt die Form eines Stutzens 1, der an seiner Innenfläche einen konischen Übergang 18 aufweist, der zugleich als Ventilsitz für ein Sicherheitsventil bestimmt ist. Als Beaufschlagungselement für das Sicherheitsventil dient der Behälterdeckel 2, in dessen dem Übergang 18 entsprechenden konischen Mantelfläche ein durchlaufender Dichtungsring 3 eingesetzt ist, der beidseitig von Bunden 20, 21 begrenzt ist, die den Dichtungsring 3 führen. Zur Aufnahme des Dichtungsringes 3 ist eine entsprechende Nut 19 vorgesehen.

In einer Nabe 29 des Behälterdeckels 2 befindet sich eine Gewindebohrung zur Aufnahme des Gewindes 22 einer Spindel 6. Durch den Spannstift 10 wird die Spindel 6 im Behälterdeckel 2 drehschlüssig gehalten.

Am Stutzen 1 befindet sich ein Lager 5 zur schwenkbaren Anordnung eines Bügels 4, an dessen dem Lager 5 abgekehrten Ende eine Klinke 11 angreift, die ihrerseits über das Lager 12 am Stutzen 1 drehbar gelagert ist. Eine Druckfeder 13 ist bestrebt, die

- 4 -

Klinke 11 im Gegenuhrzeigersinn zu verdrehen. Mit den ineinandergreifenden Arretiernasen 15, 16 wird das Anheben des Bügels 4 verhindert.

Zwischen dem Bügel 4 und dem Behälterdeckel 2 befindet sich eine vorgespannte Druckfeder 7, die sich am Bügel 4 abstützt und bestrebt ist, den Behälterdeckel 2 gegen den Ventilsitz 18 zu drücken. Mit einem Zapfen durchgreift die Spindel 6 eine Bohrung 30 im Bügel 4. Beim Ausführungsbeispiel weist dieser Zapfen ein Linksgewinde 23 zur Aufnahme eines ebenfalls mit einem paseenden Gewinde ausgestatteten Handrades 8 auf. Die Axialbewegung des Handrades 8 wird durch die Fixierscheibe 9 verhindert. Somit stützt sich die Nabe 14 des Handrades 8 einerseits gegen die Fixierscheibe 9 und andererseits gegen den Druckbügel 4 ab. Eine Verdrehung des Handrades 8 in Uhrzeigerrichtung führt dazu, daß die Spindel 6 bestrebt ist, in Richtung zum Behälterdeckel 2 sich zu bewegen. Diese Bewegung ist nur so lange möglich, bis die Fixierscheibe 9 an der Nabe 14 des Handrades 8 zur Anlage kommt. In dieser Stellung kann das Linksgewinde 23 keine Kraft mehr auf die Spindel 6 ausüben. Mithin wird der Behälterdeckel 2 allein aus der Kraft der Druckfeder 7 gegen den Ventilsitz 18 angedrückt. Die Druckfeder 7 ist dem Schließdruck entsprechend vorgespannt.

Wenn man aber das Handrad 8 im Gegenuhrzeigersinn verdreht, wird dadurch (bei Linksgewinde 23) ein Anheben der Spindel 6 von der Behälteröffnung weg herbeigeführt und zwar gegen die Vorspannkraft der Druckfeder 7. Auf diese Weise kann der Behälterdeckel 2 vom Ventilsitz 18 gelöst und der Behälter geöffnet werden.

Wenn nun bei normaler Schließstellung des Behälters sich ein Überdruck im Behälter einstellt, dann kann der Behälterdeckel 2 gegen die Wirkung der Druckfeder 7 angehoben werden, bis der Bund 24 der Spindel 6 am Bügel 4 zur Anlage kommt. Zwischen dem Ventilsitz 18 und dem Dichtungsring 3 ist dann ein so großer Spalt gebildet, daß der Überdruck entweichen kann. Ein normal verschlossener Behälter nach der Erfindung kann ohne weiteres umgestürzt werden, ohne daß der Inhalt die Funktionsfähigkeit des Sicherheitsventiles beeinträchtigt, weil der Behälterdeckel 2 unter der Wirkung der Druckfeder 7 in sattem Schließdruck am Ventilsitz 18 anliegt. Durch die Größe des Behälterdeckels 2 und des Ventilsitzes 18 ist überdies die Möglichkeit gegeben, die Dichtungsstellen leicht reinigen zu können, wenn sie beim Befüllen oder Entleeren des Behälters mit dem Inhalt in Berührung kommen sollten. Durch Verdrehen der Spindel 6 läßt sich überdies der Schließdruck der Feder 7 einstellen. Die Feder 7 ist zwischen den Anschlagflächen 25, 26 geführt, wodurch ein bestimmter Abstand 17 gegeben ist, auf den die Vorspannung der Feder eingestellt werden kann.

Will man den Behälterdeckel 2 vollständig entfernen, um den Behälter zu füllen oder zu entleeren, dann verdreht man das Handrad 8 im Gegenuhrzeigersinn so weit, bis unter Komprimierung der Druckfeder 7 die beiden Arretiernasen 15, 16 voneinander freikommen. Zu diesem Zweck ist im Stutzen 1 nasenseitig ein Schlitz 27 vorgesehen, der so tief ist, daß die Arretiernase 15 von der Gegennase 16 freikommen kann. Nun kann man die Klinke 11 gegen die Wirkung der Druckfeder 13 verschwenken, so daß die beiden Nasen voneinander freikommen, um den Bügel 4 mit dem Sicherheitsventil und dem Behälterdeckel 2 um die Schwenkachse 5 drehen zu können.

- 6 -

Die erfindungsgemäße Anordnung kann auf verschiedene Weise auf Druckfestigkeit geprüft werden. Die eine Möglichkeit besteht darin, die Spannhülse 10 und die Druckfeder 7 zu entfernen. Man kann nun bei der in der Zeichnung gezeigten Darstellung die Spindel 6 mit einem an die Schlüsselflächen 28 angreifenden Schlüssel so weit verdrehen, bis der Bund 24 am Bügel 4 zur Anlage kommt. Dadurch wird eine mechanische Verspannung des Bügels 4 über die Spindel 6 und den Behälterdeckel 2 mit dem Stutzen 1 herbeigeführt, woraufhin eine Druckprüfung gemacht werden kann. Eine andere Möglichkeit besteht darin, die Fixierscheibe 9 und das Handrad 8 zu entfernen und zwischen die Feder 7 und einer der Auflagenflächen 25, 26 eine nicht dargestellte Scheibe bestimmter Dicke einzusetzen, welche die Vorspannung der Feder 7 erhöht, woraufhin ebenfalls der Behälter dem Prüfdruck ausgesetzt werden kann.

PATENTansprüche:

1) Druckbehälter mit Sicherheitsventil für Klebstoffe, Lacke, Farben o. dgl. zum Verkleben neigende Substanzen, bei dem ein die Behälteröffnung überdeckender Bügel am Behälter schwenkbar gelagert sowie arretierbar ist und der Behälterdeckel mittels einer am Bügel geführten und sich daran abstützenden Spindel zum Schließen und Öffnen bewegbar ist, dadurch g e k e n n - z e i c h n e t , daß der Behälterdeckel (2) zugleich das Beaufschlagungselement für das Sicherheitsventil und durch eine Druckfeder (7) gegenüber dem Bügel (4) abgestützt ist.

2) Behälter nach Anspruch 1, dadurch g e k e n n z e i c h n e t , daß eine mit dem Behälterdeckel (2) unverdrehbar verbundende Spindel (6) mit einem Ansatz eine Bohrung (30) des Bügels (4) durchgreift und außerhalb des Bügels (4) ein Gewinde, vorzugsweise Linksgewinde (23), zur Aufnahme eines mit einem Gegengewinde versehenen und mit seiner Nabe (14) sich am Bügel (4) abstützenden Handrades (8)aufweist.

3) Behälter nach Anspruch 1 oder 2, dadurch g e k e n n z e i c h - n e t , daß die Druckfeder (7) zwischen dem Bügel (4) und dem Behälterdeckel (2) zentrisch angeordnet, insbesondere vorgespannt ist.

4) Behälter nach Anspruch 1 oder folgenden, dadurch g e k e n n - z e i c h n e t , daß der Bügel (4) an dem dem Schwenklager (5) abgekehrten Ende an einer schwenkbar am Behälter gelagerten Klinke (11) arretiert ist.

5) Behälter nach Anspruch 1 oder folgenden, dadurch g e k e n n - z e i c h n e t, daß der Behälterdeckel (2) an einem hohlkonischen Übergang (18) eines die Behälteröffnung bildenden Stutzens (1) dichtend anliegt, und in einer passenden, koni-schen Mantelfläche (20, 21) einen umlaufenden Dichtungsring (3) aufweist.

6) Behälter nach Anspruch 1 oder folgenden, dadurch g e k e n n - z e i c h n e t, daß die Spindel (6) in einer Nabe (29) des Behälterdeckels (2) durch einen entfernbaren Spannstift (10) drehgesichert ist.

7) Behälter nach Anspruch 1 oder folgenden, dadurch g e k e n n - z e i c h n e t, daß der Bügel (4) mit eeinem die Arretiernase (15) aufweisenden Ende in einem Schlitz (27) des Stutzens (1) geführt ist.

Dipl.-Ing.H.-D.Ernicke

Patentanwalt

0019293

1/1

Planatolwerk W. Hasselmann
Dipl.-Ing.H.-D.Ernicke, Patentanwalt
Akte: 31-447,448 - Blatt 1 v. 1

**Europäisches Patentamt**

# EUROPÄISCHER RECHERCHENBERICHT

Nummer der Anmeldung

EP 80102761.6

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | <u>FR - A - 931 337</u>  (ATELIERS HANSSENS)<br><br>÷ Gesamt +<br><br>-- | 1-3 | B 65 D 45/08<br>F 16 J 13/20 |
| | <u>CH - A - 10 441</u>  (NÜBLING & SCHWARZSCHILD)<br><br>+ Gesamt +<br><br>-- | 1,3,4 | |
| | <u>GB - A - 953 266</u>  (TOWLER & SON LIMITED)<br><br>+ Fig. II +<br><br>-- | 1,2,6 | |
| | <u>US - A - 1 321 341</u>  (TROYER)<br><br>+ Seite 2, Zeilen 6-12; Fig. 4 +<br><br>-- | 1,2 | RECHERCHIERTE SACHGEBIETE (Int. Cl. 3)<br><br>B 65 D 45/00<br>B 65 D 51/00<br>F 16 J |
| | <u>US - A - 1 739 911</u>  (MURRAY)<br><br>+ Fig. 1,2 +<br><br>-- | 1,4 | |
| | <u>US - A - 2 734 656</u>  (SCHONFELD)<br><br>+ Fig. 1,2 +<br><br>-- | 1,4,7 | |
| | <u>CH - A - 89 712</u>  (NIELSEN)<br><br>+ Seite 1; Fig. +<br><br>---- | 1,5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 07-08-1980 | KAHOVEC |

EPA form 1503.1  06.78